# EUROPEAN PATENT APPLICATION

(11) **EP 1 114 579 A2**
(43) Date of publication of application: **11.07.2001**
(21) Application number: 00127305.1
(22) Date of filing: 13.12.2000
(51) Int. Cl.: A01J 5/14

(54) **Solenoid valve for electronic pulsator comprising a valving element with opposing seal gaskets forming one piece**

(30) Priority: 04.01.2000 IT MI200002 U
(71) Applicant: INTERPULS S.P.A., 42020 Albinea, Reggio Emilia (IT)
(72) Inventor: Sicuri, Roberto, 43100 Parma (IT); Nicolini, Gabriele, 42042 Fabbrico (Reggio Emilia) (IT)
(74) Representative: Giambrocono, Alfonso, Dr. Ing.

(57) **Abstract**

The solenoid valve (14.1, 14.2) for electronic pulsators (10) for milking plants comprises a coil (16) in which there is coaxially disposed a valving element (18) comprising a part (20) in ferromagnetic material and two opposing end seal elements (22, 24) in a material for seal gaskets, said end seal elements being intended to sealedly close a relative port (28, 30). The ferromagnetic material part (20) of the valving element (18) presents a through hole (32) which enables the two seal elements (22, 24) to be formed in one piece by injection moulding directly onto the part (20) in ferromagnetic material.

## Description

This invention relates to the solenoid valves used in electronic pulsators for milking plants.

As is well known to the expert of the art, in a milking plant the electronic pulsator plays a fundamental role, in that it directly influences the quality of the milking operation and consequently both the results of this operation and the well-being of the animals concerned. It is therefore of maximum importance that the pulsator offers considerable precision, operational constancy with time and reliability.

A conventional electronic pulsator comprises a pair of solenoid valves which, by means of two relative separate channels, switch the vacuum (taken from a suction main with which the milking plant is provided) alternately between two pairs of tube stems of a milking unit. Alternately switching the vacuum causes cyclic contraction and release of corresponding sheaths housed in relative tube stems, the sheaths in their turn impressing the same contraction and release action on the corresponding teats of the animal to be milked, which have each been previously inserted into a sheath.

To obtain the alternating contraction and release effect of the sheaths, the electronic pulsator has to alternately switch between atmospheric air and vacuum. To achieve this, each of the two solenoid valves of the pulsator comprises a coil of electrically conducting wire, within which there is coaxially disposed an overall cylindrical element comprising a part in ferromagnetic material to which there are fixed two opposing rubber end parts, suitably shaped to sealedly close relative ports of the solenoid valve, so that the cylindrical element operates as a valving element.

By alternately feeding the coils of the two pulsator solenoid valves for a predetermined time (so that current passes through one coil for a certain time but not through the other, after which the situation is reversed and so on), it happens that because of the magnetic field generated by this latter, the valving element of that solenoid valve through whose coil current passes is urged upwards, to separate from the relative plane in which it rests and so uncover a lower port which communicates with the suction main, while simultaneously closing with its upper end a port communicating with the atmosphere. Consequently, when the valving element is raised, vacuum is produced within the pulsator. When the predetermined time has passed, and current passage though the coil ceases, the relative magnetic field disappears and the valving element consequently falls into its initial position, to close the port which communicates with the suction main and instead open the port which communicates with the atmosphere, the cycle being repeatable indefinitely.

In known electronic pulsators the valving element of the solenoid valve or valves consists of a part in ferromagnetic material of overall cylindrical shape, its two opposing ends presenting respectively a seat and a projection which are shaped to receive and retain respective rubber seal elements. These two opposing seal elements are inappropriately known, in the technical jargon of the sector, by the term "inversion valves".

From the aforegoing it will be evident that after preparing the ferromagnetic part of the valving element, the two inversion valves are applied to it. Such an operation requires considerable time and is not easy because of the small dimensions of these seal elements, which make handling difficult (they easily escape from the hands). All this considerably affects the pulsator cost.

It also not infrequently happens that the two said seal elements are amounted incorrectly on the ferromagnetic part of the valving element. This results in a valving element with altered dimensions, which can give rise to pulsator malfunction to the extent of causing it to lock.

Because, as already stated, correct operation of the pulsator is fundamental to the proper operation of the milking plant, the serious problems which can arise as a consequence of incorrect mounting of the seal elements is evident.

An object of this invention is to provide a solenoid valve for an electronic pulsator for milking plants which does not present the aforesaid drawbacks.

This object is attained by the solenoid valve of the present invention, in which the valving element of the solenoid valve comprises a part in ferromagnetic material and two opposing end seal elements in a material for seal gaskets, characterised in that the part in ferromagnetic material presents a through hole which enables the two seal elements to be formed in one piece by injection moulding directly onto the part in ferromagnetic material.

The solenoid valve of the invention therefore has a one-piece valving element, ready for use, without parts to be mounted or to lose, and therefore does not present the drawbacks deriving from the known valving elements for electronic pulsators.

When the ferromagnetic part of the valve has been prepared, using conventional injection moulding techniques a predetermined quantity of a suitable plastic or elastomeric material suitable for seal gaskets is injected into a suitable mould, into which the ferromagnetic part has been previously inserted, to hence form the two end seal elements which, because of the said through hole, form a single piece of plastic or elastomeric material, this piece forming a single unit with the ferromagnetic part. There is hence only one piece to be held in store and to handle.

Hence a valving element ready for use is obtained, having the required correct dimensions and easily producible with high dimensional constancy. All this beneficially affects the manufacturing and maintenance costs of the electronic pulsator.

The invention will be more apparent from the following description of one embodiment thereof. In this description reference will be made to the accompanying drawings, in which:
Figure 1 is a cross-section through an electronic pulsator for milking plants, provided with two solenoid valves of the invention;
Figure 2 is an enlarged axial longitudinal section through only the ferromagnetic part of the valving element of said solenoid valve; and
Figure 3 is an enlarged axial section through the complete valving element.

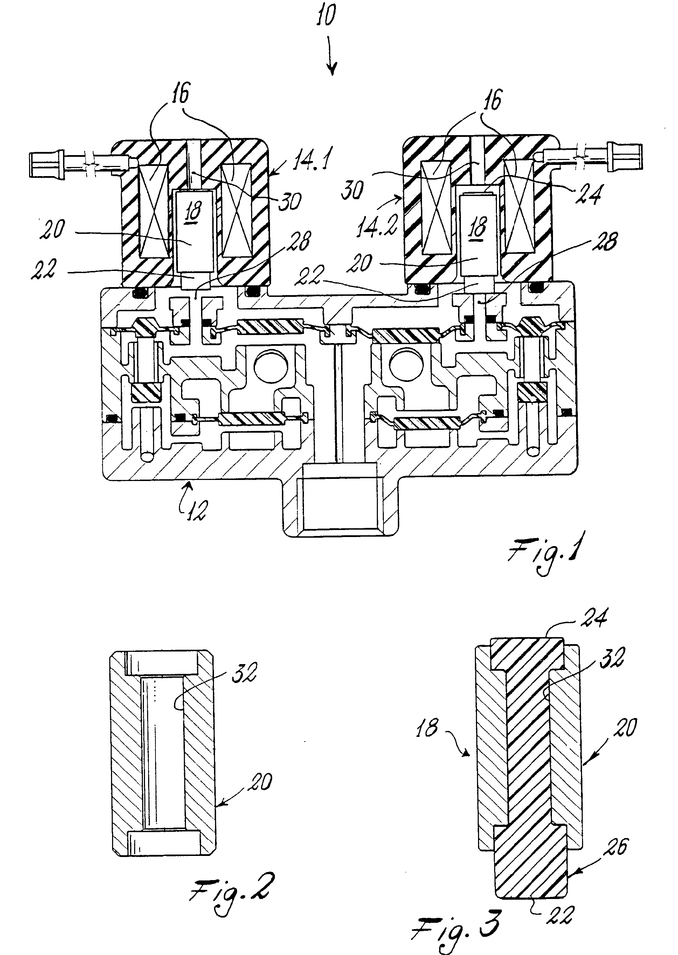

From Figure 1 it can be seen that an electronic pulsator 10 for a milking plant comprises a body 12 of conventional type, to which there are fixed two specularly disposed solenoid valves 14.1 and 14.2. The body 12 comprises two equal but specularly disposed parts, to each of which a solenoid valve is connected. Each of the two parts of the body 12, with the relative solenoid valve, is of the type described in Italian patent 1268592 (to which reference should be made for details of its structure and operation), and will not be described in detail herein, other than to state that each solenoid valve (14.1 and 14.2) comprises a winding or coil of electrically conducting wire and a valving element 18, more clearly illustrated in figure 3.

The valving element 18 comprises a part 20 of a ferromagnetic material, which is therefore sensitive to the magnetic field generated by the relative coil 16 when an electric current flows through this latter so that on the ferromagnetic part 20 there acts an upwardly directed force sufficient to raise the valving element 18 (as shown in the solenoid valve 14.1) to open the port 28 communicating with the suction main (not shown) and simultaneously close the port 30 communicating with atmosphere. When the passage of electric current through the coil is interrupted, said force acting on the ferromagnetic part 20 of the valving element 18 ceases, so that this latter returns by gravity to its position in the valve 14.2 of figure 1, to close the port 28 and hence interrupt communication with the suction main, while simultaneously opening the port 30 communicating with atmosphere.

Analyzing in greater detail the valving element 18 (figure 3) it can be seen that the end seal elements 22 and 24 form therein a single piece 26, of rubber or of a plastic or elastomeric material suitable for gaskets. The piece 26 is obtained, as already stated, by known injection moulding techniques, after previously positioning the ferromagnetic part, having an axial through hole 32, in a suitable mould. As can be seen from figure 3, the piece 26 is shaped such as not to be able in practice to be separated from the ferromagnetic part 20, with which it forms a single unit. This is achieved by giving the two ends of the through hole 32 a diameter decidedly greater than that of the intermediate part of the said through hole 32.

## Claims

1. A solenoid valve (14.1, 14.2) for electronic pulsators (10) for milking plants, comprising a coil (16) in which there is coaxially disposed a valving element (18) comprising a part (20) in ferromagnetic material and two opposing end seal elements (22, 24) in a material for seal gaskets, said end seal elements being intended to sealedly close a relative port (28, 30) provided in the body (12) of the solenoid valve (14.1, 14.2), characterised in that the part (20) in ferromagnetic material presents a through hole (32) which enables the two seal elements (22, 24) to be formed in one piece by injection moulding directly onto the part (20) in ferromagnetic material.

2. A solenoid valve (14.1, 14.2) as claimed in claim 1, wherein the constituent material of the seal elements (22, 24) is rubber or an elastomer.

3. A solenoid valve (14.1, 14.2) as claimed in claim 1, wherein the two ends of the through hole (32) have a diameter decidedly greater than that of the intermediate part thereof.
